(19) Europäisches Patentamt

European Patent Office

Office européen des brevets

(11) **EP 1 205 695 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
***F16J 15/34*** *(2006.01)*

(21) Anmeldenummer: **01120379.1**

(22) Anmeldetag: **25.08.2001**

(54) **Gleitringdichtung**

Mechanical seal

Garniture mécanique d'étanchéité

(84) Benannte Vertragsstaaten:
**DE FR GB IT**

(30) Priorität: **13.11.2000 DE 10056102**

(43) Veröffentlichungstag der Anmeldung:
**15.05.2002 Patentblatt 2002/20**

(73) Patentinhaber: **Carl Freudenberg KG**
**69469 Weinheim (DE)**

(72) Erfinder: **Kraus, Reinhold**
**69509 Mörlenbach (DE)**

(56) Entgegenhaltungen:
**EP-A- 0 900 959        DE-A- 19 712 480**

EP 1 205 695 B1

## Beschreibung

Die vorliegende Erfindung befasst sich mit einer Fluidhochdruckdichtung, insbesondere mit einer Gleitringdichtung, die als Wellendichtvorrichtung an Kompressoren für Klimaanlagen, insbesondere Fahrzeugklimaanlagen, welche Kohlenstoffdioxid als Kühlmittel verwenden, benutzt wird.

Fahrzeugklimaanlagen haben traditionell Fluorokarbon als Kühlmittel benutzt. Jedoch negative Effekte des Fluorokarbons (Flon R 134 a) auf die globale Erwärmung haben Studien mit einer Vielzahl von anderen Kühlmitteln angeregt, um Fluorokarbon zu ersetzen. Eines der aussichtreichsten Kühlmittel hierfür ist Kohlenstoffdioxid ($CO_2$).

Während die Verwendung von Fluorkohlenstoff als Kühlmittel einen Saugdruck für den Kompressor unter normalen Bedingungen von etwa 0,2 MPa und einen Förderdruck von etwa 2 MPa erfordert, tritt bei der Benutzung von Kohlenstoffdioxid als Kühlmittel eine Erhöhung des erforderlichen Kompressordrucks bis zu einem Saugdruck von etwa 3 MPa und einem Förderdruck von etwa 7 MPa ein.

Stand der Technik

In der US-Patentschrift 4,623,153 ist ein Kompressor beschrieben, der Fluorkohlenstoff als Kühlmittel benutzt und eine Öl-Wellendichtung verwendet, welche aus einer Kombination eines Gummirings und eines Kunstharzringes besteht. Die Verwendung von Kohlenstoffdioxid als Kühlmittel bewirkt jedoch einen Arbeitsdruck des Kompressors, welcher höher ist, als oben angegeben, ungeachtet der Verwendung der Öldichtung.

Unter den möglichen Ersatzdichtungen ist die herkömmliche Gleitringdichtung, die bei einem höheren Druck als Tandem ausgebildet sein können und in Reihe von zwei jeweils angebracht die Belastung an jeder Dichtung auf die Hälfte reduzieren. Diese Vorgehensweise ist jedoch insofern mangelhaft, weil der erforderliche Raum für die Dichtungen zu groß ist.

Im allgemeinen wird der Gleitring aus einem Kohlenstoffgleitmaterial und der Gegenring aus einem Gleitmaterial mit einer höheren Härte als das Kohlenstoffgleitmaterial beispielsweise aus Siliziumkarbid oder Wolframkarbid hergestellt.

Dichtungen nut Gleit - und Gegenring mit ähnlich hoher Härte sind ebenfalls bekannt, siehe Z.B DE-A- 197 12480.

Bei Gleitringdichtungen wird das Kohlenstoffgleitmaterial, das einen geringen Elastizitätsmodul hat, unter Druck deformiert, wenn es einem hohen Druck durch Kohlenstoffdioxiddruck unterworfen wird, wodurch eine Zerstörung der dichtenden Oberflächen eintritt. Um dieses Problem zu vermeiden, ist es denkbar, eine Kombination aus einem harten Material mit hohem Elastizitätsmodul, wie beispielsweise Siliziumkarbid oder Wolframkarbid, für beide Teile zu verwenden, um eine Deformation und Zerstörung der Dichtflächen zu vermeiden.

Die Gleiteigenschaften zwischen einer Kombination aus diesen harten Materialien ist jedoch insofern nachteilig, als unter schlecht geschmierten Verhältnissen ein Festfressen oder ein Aufrauhen der Oberfläche oder dergleichen eintritt, wodurch die Dichtleistung reduziert wird.

Die vorliegende Erfindung soll die oben genannten Probleme lösen und bildet eine Gleitringdichtung als Wellendichtung für einen Kompressor, der unter insbesondere hohen Temperaturen arbeitet und der eine Zerstörung der Dichtflächen verhindert mit weitgehendem Ausschalten von Festfressen oder Aufrauhen der Oberfläche oder ähnlichem, wodurch eine Leckage des Kühlmittels und des Schmiermittels verhindert wird.

Darstellung der Erfindung

Die vorliegende Erfindung ist im Wesentlichen eine Gleitringdichtung, mit einem Gegenring, der über einen O-Ring auf einer Welle eines Kompressors befestigt ist und mit der Welle rotiert, und mit einem feststehenden Gegenring, der gasdicht über einen O-Ring an dem Gehäuse des Kompressors befestigt ist. Beide werden durch eine Feder aneinander gedrückt und sind abgedichtet und gegeneinander gleitend, wobei einer der Ringe aus einem Kohlenstoff-Siliziumkarbid-Kompositmaterial und der andere aus einem Siliziumkarbidmaterial besteht.

Das Kohlenstoff-Siliziumkarbid-Kompositmaterial hat eine Struktur, welche durch eine teilweise Umwandlung der Oberflächenschicht des Kohlenstoffsubstrats in ein Siliziumkarbidmaterial entsteht. Das Siliziumkarbidmaterial ist vorzugsweise durch reaktives oder atmosphärisches Sintern gebildet. Das Siliziumkarbidmaterial hat vorzugsweise ein Siliziumkarbidverhältnis von wenigstens 85 % oder höher. Hierdurch wird eine ausreichende Oberflächenhärte und Elastizitätsmodul sichergestellt.

Das Kohlenstoff-Siliziumkarbid-Kompositmaterial wird durch eine teilweise Umwandlung der Oberflächenschicht des Kohlenstoffsubstrats in ein Siliziumkarbidmaterial erhalten und hat einen höheren Elastizitätsmodul als übliche Kohlenstoffgleitmaterialien, so dass es einer minimalen Deformation, selbst unter hohem Druck, unterliegt und trotzdem einen selbstschmierenden, kohlenstoffhaltigen Teil hat, wodurch Probleme, wie Anfressen, Oberflächenrauheit oder ähnliches selbst unter schlechten Schmierbedingungen minimiert werden. Eine Kombination mit einem Siliziumkarbidgleitmaterial gestattet damit eine dauerhafte Abdichtung aufrechtzuerhalten. Das Kohlenstoff-Siliziumkarbid-Kompositmaterial sollte im Hinblick auf seinen Druckwiderstand und seine Gleitcharakteristiken vorzugsweise einen Kohlenstoffgehalt von 40 % bis 85 % und einen Siliziumkarbidgehalt von 60 % bis 15 % für die Oberflächenschicht haben.

Als Gleitmaterial sollte das Siliziumkarbidmaterial vorzugsweise unabhängige einzelne Poren haben. Als Siliziumkarbidmaterial wird vorzugsweise ein Siliziumkarbidmaterial verwendet, welches durch ein atmosphärisches oder reaktives Sintern erhalten worden ist. Die Verwendung von Siliziumkarbidmaterial mit einzelnen Poren gestattet die Beibehaltung eines Flüssigkeitsfilms auf der Dichtoberfläche selbst unter schlechten Schmierverhältnissen, wodurch eine stabile Abdichtung unter den geforderten Betriebskonditionen erhalten wird. Eine ungünstigere Dichtwirkung tritt jedoch ein, wenn die einzelnen Poren von einem mittleren, spezifischen Porendurchmesser und Porosität abweichen, so dass, um die Dichtwirkung der Dichtung sicherzustellen, das Siliziumkarbidmaterial, vorzugsweise einzelne Poren, mit einem mittleren Porendurchmesser von nicht größer als 60 μm bei einer Porosität von 2 % bis 15 % hat.

Die Rauheit der Dichtoberfläche beeinflusst die Dichtwirkung der Dichtung. Das Kohlenstoff-Siliziumkarbid-Kompositmaterial hat vorzugsweise eine Endrauheit von 0,005 bis 0,07 μm und das Siliziumkarbidmaterial vorzugsweise eine Dichtoberflächenrauheit im Bereich von 0,002 bis 0,03 μm, ausgedrückt als arithmetisches Rauheitsmittel ($R_a$) (ausgenommen die einzelnen Poren), so dass sie eine Leckage verhindern.

Kurzbeschreibung der Zeichnung

Anhand der beiliegenden Zeichnungen wird die Erfindung näher erläutert.
Es zeigt:

Fig. 1   im Querschnitt die Gleitringdichtung und

Fig. 2   in graphischer Darstellung die Wirkung der Dichtoberflächenrauheit auf die Leckage der Gleitringdichtung.

Ausführung der Erfindung

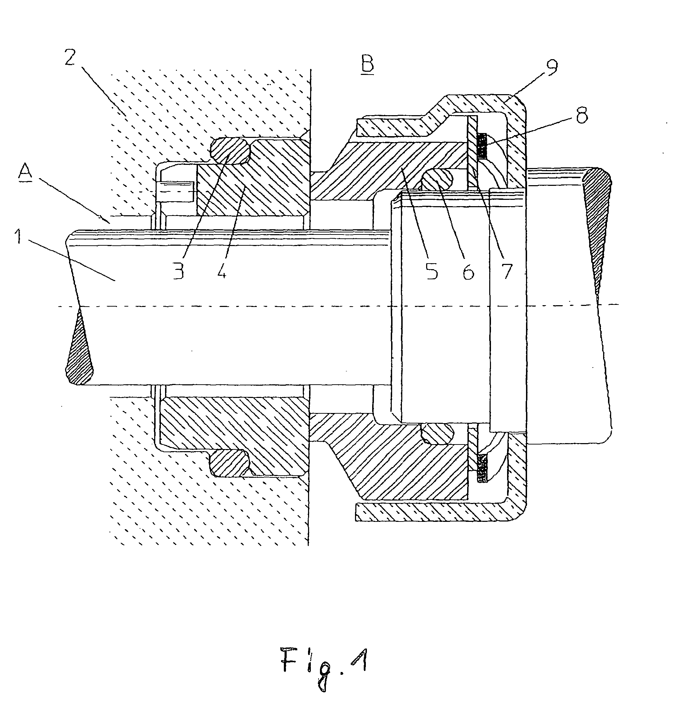

In der Fig. 1 ist die Grundstruktur der Gleitringdichtung der vorliegenden Erfindung wiedergegeben. Ein Gleitring 5 ist über den O-Ring 6 auf der Welle 1 eines Kompressors befestigt. Der Gleitring 5 ist unverdrehbar mit dem Mitnehmergehäuse 9 verbunden. Das Gehäuse 9 ist seinerseits unverdrehbar auf die Welle 1 aufgesetzt, so dass sie mit der Welle 1 rotiert. Der Gleitring 5 wird über den Druckring 7 durch die Feder 8 gegen die stirnseitige Oberfläche des Gegenrings 4 gedrückt. Der Gleitring 5 ist in dem Mitnehmergehäuse 9 gehalten. Gleitring 5 und Gegenring 4 sind gegeneinander gedrückt und bilden eine Dichtfläche. Der Gegenring 4 ist gasdicht über den O-Ring 3 in ein Gehäuse 2 eingesetzt und drehfest mittels eines Stiftes oder dergleichen befestigt. Die Dichtoberfläche, die durch den Gleitring 5 und den Gegenring 4 gebildet ist, verhindert jegliche Leckage des Kohlenstoffdioxid-Kühlmittels und Schmiermittelöls, welche auf der Flüssigkeitsseite im Raum B der Dichtung zur atmosphärischen Seite A vorhanden ist.

Der Gleitring 5 oder der Gegenring 4 sind aus einem Kohlenstoff-Siliziumkarbid-Kompositmaterial hergestellt und der andere besteht aus einem Siliziumkarbidmaterial. Das Kohlenstoff-Siliziumkarbid-Kompositmaterial ist durch eine Behandlung eines Kohlenstoffsubstrats mit Silizium hergestellt, wobei eine teilweise Umwandlung des Kohlenstoffs in Siliziumkarbid stattfindet. Dabei besteht keine besondere Einschränkung für das Verfahren für die Umwandlung des Kohlenstoffs in Siliziumkarbid, welches beispielsweise ein Gasbehandlungsverfahren mit einem Gas, welches Silizium, beispielsweise Siliziummonoxid, enthält, oder auch ein Flüssigkeitsverfahren, bei dem Silizium in das Kohlenstoffmaterial eindringt und dort reagiert. Damit das Silizium eindringt, kann ein Kohlenstoffsubstrat verwendet werden, welches feine, unabhängige einzelne Poren hat. In diesem Fall durchdringt und infiltriert das Silizium die auf der Oberfläche des Kohlenstoffsubstrats vorhandene Poren und generiert Siliziumkarbid in diesem Bereich.

Das Kohlenstoff-Siliziumkarbid-Kompositmaterial wird durch Umwandlung der Oberflächenschicht des Kohlenstoffsubstrats zu Siliziumkarbid erhalten. Wenn das Kohlenstoffsubstrat auf diese Weise zu Siliziumkarbid umgewandelt wird, nimmt es eine Struktur an, in der die äußerste Schicht aus einer Siliziumkarbid-Schicht mit einem erhöhten Kohlenstoffinhalt besteht und bei einem tieferen Eindringen in das Innere, übergeht von einer Schicht mit Kohlenstoff und Siliziumkarbid zu einer Schicht mit nur Kohlenstoff. Die Gleitfläche wird durch Entfernung der äußersten Schicht hergestellt, so dass endbearbeitete Schichten aus Kohlenstoff und Siliziumkarbid hergestellt sind. Im Hinblick auf den Druckwiderstand und auf Gleitcharakteristiken wird die äußerste Schicht der Gleitfläche mit einem Kohlenstoffgehalt von 40 % zu 85 % und einem Siliziumkarbidgehalt von 60 % bis 15 % versehen. Die Tiefe der Schicht, welche Siliziumkarbid enthält, ist etwa 1 bis 5 mm dick. Das Verhältnis von Siliziumkarbid zu Kohlenstoff auf der Oberflächenschicht kann vom Flächenverhältnis einer jeden Komponente der Oberfläche erhalten werden.

Das Kohlenstoff-Siliziumkarbid-Kompositmaterial hat einen hohen Elastizitätsmodul. Im allgemeinen hat das in Gleitringdichtungen verwendete Kohlenstoffmaterial einen Elastizitätsmodul von etwa 10 bis 13 GPa. Im Gegensatz hierzu hat das Kohlenstoff-Siliziumkarbid-Kompositmaterial bei einer Siliziumkarbidumwandlung in einem Verhältnis von 44 %, einen höheren Elastizitätsmodul von etwa 25 GPa. Der Elastizitätsmodul des Kohlenstoff-Siliziumkarbid-Kompositmaterial ist relativ klein im Vergleich zum Elastizitätsmodul von Siliziumkarbid selbst von etwa 360 GPa. Jedoch bewirkt es eine Reduktion der Deformation unter Druck bei hohen Drükken. Da der Kohlenstoff selbstschmierend ist, verhindert dieses das Anfressen oder Oberflächenaufrauhen, so dass es eine stabile Dichtung als Gleitmaterial sicherstellt. Wenn der Umwandlungsanteil von Siliziumkarbidumwandlung 60 % übersteigt, steigt die Härte an, so dass die Dichtoberfläche zum Anfressen oder Aufrauhen der Oberfläche in schlecht geschmierter Umgebung tendiert. Eine Siliziumkarbidumwandlung von geringer als 15 % bewirkt einen Abfall des Elastizitätsmoduls, wodurch das Material leichter an der Dichtfläche unter Druck deformiert wird, was zu einem Ausfall der Dichtung durch ein beschleunigtes Abnutzen der Dichtfläche führen kann. Der Kohlenstoffanteil sollte bei 40 % bis 85 % und der Siliziumkarbidanteil bei 60 % bis 15 % liegen.

Das Siliziumkarbidmaterial, welches den anderen Ring bildet, ist vorzugsweise durch ein reaktives Sinter-Verfahren erhalten, in dem ein geformter Gegenstand aus Kohlenstoff und Siliziumkarbid einer Penetration mit Silizium bei hohen Temperaturen unterworfen wird und einem atmosphärischen Sinter-Verfahren, dass mit einen Siliziumkarbid-Pulver oder ähnlichem arbeitet. Das Siliziumkarbidmaterial enthält vorzugsweise mindestens 85 % an Siliziumkarbid. Hierdurch wird die Oberflächenhärte und der Elastizitätsmodul sichergestellt.

Das Siliziumkarbidmaterial ist ein Material, das unabhängige einzelne Poren hat und das als Dichtflächenmaterial für die Gleitringdichtung verwendet wird. Dieses Siliziumkarbidmaterial mit den einzelnen Poren ermöglicht die Beibehaltung eines Flüssigkeitsfilms auf der Oberfläche der Dichtung selbst in schlecht geschmierter Umgebung, wodurch selbst unter Betriebsbedingungen mit hoher Anforderung eine sichere Abdichtung gegeben ist. Wenn jedoch diese einzelnen Poren vom vorgegebenen mittleren Porendurchmesser und Porosität abweichen, so wird die Dichtwirkung negativ beeinflusst.

Wenn der Durchmesser einer einzelnen Pore zu groß ist, so wird die Materialstärke reduziert, was zufolge hat, dass Kühlmittel und Schmiermittel in größeren Mengen zur atmosphärischen Seite austreten und die Dichtwirkung negativ beeinflusst wird. Im Hinblick hierauf ist der Durchmesser der einzelnen Poren vorzugsweise nicht größer als 60 μm. Eine Porosität größer als 15 % bewirkt, dass die Festigkeit des Rings selbst reduziert wird und nicht länger fähig ist, die Festigkeit der Gleitringdichtung selbst beizubehalten. Auf der anderen Seite ist eine Porosität von 2 % oder weniger nicht fähig, die notwendige Menge an Flüssigkeitsschmierung sicherzustellen, wodurch die Schmierung der Dichtflächen herabgesetzt wird. Diese Gesichtspunkte geben eine Porosität von 2 % bis 15 % vor.

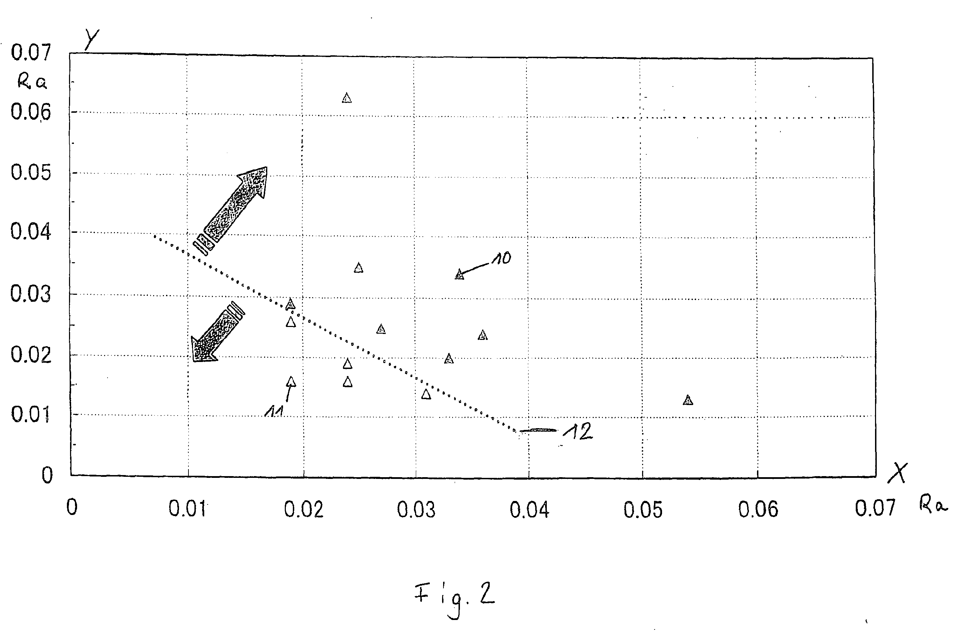

Die Fahrzeugklimaanlagen-Kompressoren sind die meiste Zeit über nicht in Betrieb und ausgeschaltet. Bei stillstehendem Kompressor ist das Kühlmittel gesättigt, so dass der Druck im Kompressor sich in Abhängigkeit von der Umgebungstemperatur verändert. Für den Fall eines Kohlenstoffdioxid-Kühlmittels erreicht der Druck im Kompressor bei einer Raumtemperatur von 20°C etwa 5 MPa. Wenn bei diesen Bedingungen ein hoher Druck an der Dichtfläche wirkt, können das Kohlenstoffdioxid-Kühlmittel und das Schmieröl auf die atmosphärische Seite A austreten, wenn der Spalt an der Dichtfläche groß ist, zum Beispiel bei hoher Oberflächenrauhigkeit. Dieses hat eine Studie veranlasst, um die Lekkage durch die Rauheit an der Dichtfläche zu prüfen. Die Ergebnisse dieser Studie sind in der Fig. 2 zusammengefasst, welche die Abhängigkeit der Leckage von der Rauheit der Gleitflächen zeigt. Die Fig. 2 zeigt, dass die Leckage minimal ist, wenn die Oberflächenrauheit des Kohlenstoff-Siliziumkarbid-Kompositmaterials 0,005 bis 0,07 μm und des Siliziumkarbidmaterials 0,002 bis 0,03 μm ist, gemessen als arithmetrische mittlere Rauheit ($R_a$). Dieser Wert schließt jedoch die Poren in den porenenthaltenen Ringen aus.

Auf der X-Koordinate ist die Rauheit $R_a$ (μm) der Gleitringoberfläche und auf der Y-Koordinate die Rauheit $R_a$ (μm) der Gegenringoberfläche dargestellt. Die Dreiecke zeigen die Messpunkte an. Dabei geben die geschlossenen Dreiecke 10 aufgetretene Leckagen und die offenen Dreiecke 11 Messpunkte ohne Leckagen an. Die punktierte Linie 12 stellt eine Grenzlinie zwischen den Bereichen mit Leckage und ohne Leckage dar.

Die arithmetrische mittlere Rauheit (Ra) wird durch Entnahme einer Standardlänge von einer Rauhigkeitskurve in Richtung einer mittleren Linie erhalten und drückt die Rauheitskurve mit der X-Achse in Richtung auf die mittlere Linie dieses ausgewählten Teils und die Y-Achse in Richtung eines Längenverhältnisses aus:

$$y = f(x)$$

wobei der erhaltene Wert durch die folgende Gleichung in Mikrometer ausgedrückt ist:

$$R_a = \frac{1}{L} \int_0^L f(x)\, dx.$$

wobei L eine Standardlänge repräsentiert.

Die vorliegende Erfindung ist eine Gleitringdichtung, bei der eine der Dichtoberflächen aus einem Kohlenstoff-Siliziumkarbid-Kompositmaterial und die andere aus einem Siliziumkarbidmaterial besteht. Diese Kombination eines Kohlenstoff-Siliziumkarbid-Kompositmaterial und eines Siliziumkarbidmaterials an der Dichtoberfläche unterdrückt die Deformation der Dichtoberfläche unter Drücken und verhindert dadurch deren Zerstörung und stellt insbesondere eine dauerhafte Dichtung dar.

**Patentansprüche**

1. Gleitringdichtung mit einem Gleitring (5), der über einen O-Ring (6) auf einer Welle (1) eines Verdichters befestigbar ist und im betestigten Zustand it der Welle (1) rotiert, und einem drehfesten Gegenring (4), der gasdicht über einen O-Ring (3) an einem Gehäuse (2) des Verdichters befestigbar ist, wobei Gleitring (5) und Gegenring (4) durch eine Feder (8) abdichtend gegeneinander gedrückt werden und aufeinander gleiten, **dadurch gekennzeichnet, dass** einer der Ringe (4, 5) aus einem Kohlenstoff-Siliziumkarbid-Kompositmaterial und der andere aus einem Siliziumkarbidmaterial hergestellt ist und wobei für die Oberfläche aus dem Kohlenstoff-Siliziumkarbid-Kompositmaterial der Kohlenstoffgehalt 40 % bis 85 % und das Siliziumumwandlungsverhältnis 60 % bis 15 % beträgt.

2. Gleitringdichtung nach Anspruch 1, **dadurch gekennzeichnet, dass** das Kohlenstoff-Siliziumkarbid-Kompositmaterial eine Struktur hat, die durch eine teilweise Umwandlung der Oberflächenschicht des Kohlenstoffsubstrats in ein Siliziumkarbidmaterial erhalten wurde.

3. Gleitringdichtung nach einem der Ansprüche 1 oder 2, **dadurch gekennzeichnet, dass** Siliziumkarbidmaterial unabhängige einzelne Poren mit einer mittleren Porengröße von nicht größer als 60 $\mu$m bei einer Porosität von 2 % bis 15 % hat.

4. Gleitringdichtung nach einem der Ansprüche 1 bis 3, **dadurch gekennzeichnet, dass** das Kohlenstoff-Siliziumkarbid-Kompositmaterial eine Dichtoberflächenbeschaffenheit mit Rauheitswerten von 0,005 bis 0,07 $\mu$m und das Siliziumkarbidmaterial eine Dichtoberflächenbeschaffenheit mit Rauheitswerten von 0,002 bis 0,03 $\mu$m hat, ausgedrückt als arithmetrische mittlere Rauheit ($R_a$), die Poren ausgenommen.

## Claims

1. Mechanical seal with a sliding ring (5), which can be fastened on a shaft (1) of a compressor by means of an O-ring (6) and, in the fastened state, rotates with the shaft (1), and with a rotationally fixed counter ring (4), which can be fastened on a housing (2) of the compressor in a gas-tight manner by means of an O-ring (3), the sliding ring (5) and the counter ring (4) being pressed against each other in a sealing manner by a spring (8) and sliding on each other, **characterized in that** one of the rings (4, 5) is produced from a carbon/silicon-carbide composite material and the other is produced from a silicon-carbide material and, for the surface comprising the carbon/silicon-carbide composite material, the carbon content is 40% to 85% and the silicon conversion ratio is 60% to 15%.

2. Mechanical seal according to Claim 1, **character-**

**ized in that** the carbon/silicon-carbide composite material has a structure which is obtained by a partial conversion of the surface layer of the carbon substrate into a silicon-carbide material.

3. Mechanical seal according to either of Claims 1 and 2, **characterized in that** silicon-carbide material has independent individual pores with an average pore size of not greater than 60 $\mu$m with a porosity of 2% to 15%.

4. Mechanical seal according to one of Claims 1 to 3, **characterized in that** the carbon/silicon-carbide composite material has an impermeable surface quality with roughness values of from 0.005 to 0.07 $\mu$m and the silicon-carbide material has an impermeable surface quality with roughness values of from 0.002 to 0.03 $\mu$m, expressed as an arithmetic mean roughness ($R_a$), excluding the pores.

## Revendications

1. Garniture mécanique d'étanchéité comprenant une bague glissante (5) qui peut être fixée par le biais d'un joint torique (6) sur un arbre (1) d'un compresseur et qui, dans l'état fixé, tourne avec l'arbre (1), et une contre-bague fixe en rotation (4), qui peut être fixée de manière étanche aux gaz sur un boîtier (2) du compresseur par le biais d'un joint torique (3), la bague glissante (5) et la contre-bague (4) étant pressées l'une contre l'autre par un ressort (8) de manière hermétique et glissant l'une sur l'autre, **caractérisée en ce que** l'une des bagues (4, 5) est fabriquée en un matériau composite en carbone et en carbure de silicium et l'autre est fabriquée à partir d'un matériau en carbure de silicium, la teneur en carbone de la surface du matériau composite en carbone et en carbure de silicium étant de 40% à 85% et le rapport de transformation du silicium étant de 60% à 15%.

2. Garniture mécanique d'étanchéité selon la revendication 1, **caractérisée en ce que** le matériau composite en carbone et carbure de silicium a une structure qui a été obtenue par une transformation partielle de la couche superficielle du substrat en carbone en un matériau en carbure de silicium.

3. Garniture mécanique d'étanchéité selon la revendication 1 ou 2, **caractérisée en ce que** le matériau en carbure de silicium a des pores individuels indépendants ayant une taille de pores moyenne ne dépassant pas 60 $\mu$m pour une porosité de 2% à 15%.

4. Garniture mécanique d'étanchéité selon l'une quelconque des revendications 1 à 3, **caractérisée en ce que** le matériau composite en carbone et carbure de silicium a une constitution de surface d'étanchéité avec des valeurs de rugosité de 0,005 à 0,07 $\mu$m et le matériau en carbure de silicium a une constitution de surface d'étanchéité avec des valeurs de rugosité de 0,002 à 0,03 $\mu$m, exprimée sous forme de rugosité moyenne arithmétique ($R_a$), à l'exception des pores.

Fig. 1

Fig. 2